# EUROPEAN PATENT APPLICATION

(11) **EP 4 608 053 A1**
(43) Date of publication of application: **27.08.2025**
(21) Application number: 23899650.8
(22) Date of filing: 31.10.2023
(51) Int. Cl.: H04W 76/14, H04W 84/12, H04W 72/04

(54) **P2P SERVICE DATA TRANSMISSION METHOD AND ELECTRONIC DEVICE**

(30) Priority: 06.12.2022 CN 202211580675
(71) Applicant: Huawei Technologies Co., Ltd., Shenzhen, Guangdong 518129 (CN)
(72) Inventor: LIU, Zhengqi, Shenzhen, Guangdong 518129 (CN); TANG, Guowang, Shenzhen, Guangdong 518129 (CN); LIU, Ya, Shenzhen, Guangdong 518129 (CN); DUAN, Kaiyong, Shenzhen, Guangdong 518129 (CN)
(74) Representative: Epping - Hermann - Fischer
(86) International application number: PCT/CN2023/128380
(87) International publication number: WO 2024/120069

(57) **Abstract**

This application provides a P2P service data transmission method and an electronic device. A first electronic device transmits P2P service data on a first channel within a first time period, and further transmits the P2P service data on a second channel within a second time period. In other words, the first electronic device separately transmits the P2P service data on different channels in an operating time period of a P2P service (for example, an operating slot of the P2P service) and a sleep time period of the P2P service (for example, a sleep slot of the P2P service). In this way, a time length for transmitting the P2P service data is increased, to increase a throughput of the P2P service data and reduce a transmission delay of the P2P service data, thereby improving transmission efficiency of the P2P service data and improving user experience.

## Description

This application claims priority to Chinese Patent Application No. 202211580675.9, filed with the China National Intellectual Property Administration on December 6, 2022 and entitled "P2P SERVICE DATA TRANSMISSION METHOD AND ELECTRONIC DEVICE", which is incorporated herein by reference in its entirety.

### TECHNICAL FIELD

This application relates to the communication field, and more specifically, to a P2P service data transmission method and an electronic device.

### BACKGROUND

The Wi-Fi peer-to-peer (wireless fidelity peer-to-peer, Wi-Fi P2P) technology is an important technology under the "Wi-Fi direct (Wi-Fi DIRECT)" standard protocol launched by the wireless fidelity (Wireless Fidelity, Wi-Fi) alliance. Wi-Fi P2P allows two Wi-Fi devices to directly connect to and communicate with each other without involvement of Wi-Fi hotspots.

With gradual enhancement of functions of current electronic devices (such as smartphones, tablet computers, smart screens, large-screen devices, smart televisions, and notebook computers), the electronic devices may not only support a conventional wireless local area network (wireless local area network, WLAN) function, for example, accessing a wireless network through a Wi-Fi hotspot (such as a wireless access point (access point, AP) access point) to implement a Wi-Fi service, but also support a P2P service (or may be referred to as a Wi-Fi P2P service), for example, a screen casting service, file sharing, or data stream migration between two electronic devices. When an electronic device performs a Wi-Fi service on a Wi-Fi channel, the electronic device may further perform a P2P service on another Wi-Fi channel with another electronic device. In this case, a throughput and a transmission delay of P2P service data may be increased, thereby reducing transmission efficiency of the P2P service data and user experience.

### SUMMARY

This application provides a P2P service data transmission method and an electronic device, to improve a throughput of P2P service data, reduce a transmission delay of the P2P service data, improve transmission efficiency of the P2P service data, and improve user experience.

According to a first aspect, a P2P service data transmission method is provided. The method may be executed by a first electronic device, or may be executed by a chip applied to a first electronic device. The method includes: The first electronic device transmits first service data to a second electronic device on a first channel within a first time period. The first electronic device transmits the first service data to the second electronic device on a second channel within a second time period. The second time period is used by the first electronic device for transmitting second service data. The first time period includes an operating slot of a P2P service or a sleep slot of a Wi-Fi service, and the second time period includes a sleep slot of the P2P service or an operating slot of the Wi-Fi service. The first service data may be P2P service data, and the second service data may be Wi-Fi service data.

According to the P2P service data transmission method provided in the first aspect, the first electronic device transmits the P2P service data on the first channel within the first time period, and further transmits the P2P service data on the second channel within the second time period. In other words, the first electronic device separately transmits the P2P service data on different channels in an operating time period of the P2P service (for example, the operating slot of the P2P service) and a sleep time period of the P2P service (for example, the sleep slot of the P2P service). In this way, a time length for transmitting the P2P service data is increased, to increase a throughput of the P2P service data and reduce a transmission delay of the P2P service data, thereby improving transmission efficiency of the P2P service data and improving user experience.

In this embodiment of this application, the first channel is used for transmitting the P2P service, and the second channel may be used for transmitting the Wi-Fi service.

For example, the first electronic device may be a GO device in a P2P group, and the second electronic device may be a GC device in the P2P group.

For example, the first channel or the second channel may be any channel in a 5 GHz frequency band or a 2.4 GHz frequency band. The first channel and the second channel are different channels. For example, the first channel may be a channel 149, and the second channel may be a channel 36. The first channel and the second channel may belong to a same frequency band (the 5 GHz frequency band or the 2.4 GHz frequency band), or may belong to different frequency bands.

For example, the first time period may include at least one operating frame (or may be a subframe or a symbol) of the P2P service, and the second time period may include at least one sleep frame (or may be a subframe or a symbol) of the P2P service.

In a possible implementation of the first aspect, the second channel is used by the first electronic device for transmitting Wi-Fi service data.

In a possible implementation of the first aspect, before the first electronic device transmits the first service data to the second electronic device on the second channel, the method further includes: The first electronic device sends indication information to the second electronic device, where the indication information indicates channel information of the second channel. In this implementation, the second electronic device may clearly learn of information about the second channel. This ensures that the first electronic device and the second electronic device further transmit the P2P service data on the second channel within the second time period, thereby ensuring transmission efficiency of the P2P service data.

In a possible implementation of the first aspect, the indication information is carried in a beacon (beacon) frame. In this implementation, the indication information is carried in an original beacon frame. In this way, the first electronic device does not need to use additional signaling and communication resources to send the indication information. This may reduce signaling overheads, save communication resources, and improve utilization of communication resources.

In a possible implementation of the first aspect, the channel information of the second channel includes an identifier and a bandwidth identifier of the second channel. For example, the channel information of the second channel may include a channel number and a bandwidth number of the second channel. In this implementation, on one hand, the second electronic device may quickly and accurately determine the channel information of the second channel, thereby improving efficiency and accuracy of obtaining the channel information of the second channel by the second electronic device. On the other hand, a length of the indication information may be reduced, signaling overheads of the indication information may be reduced, and communication resources may be saved.

In a possible implementation of the first aspect, the indication information further indicates channel information of the first channel. For example, information about an updated first channel may be sent to the second electronic device by using the indication information, to improve transmission efficiency of the P2P service data. Alternatively, the first electronic device may send determined channel information of the first channel to the second electronic device by using the indication information. In this way, the first electronic device and the second electronic device may transmit the P2P service data on the first channel, thereby ensuring that the P2P service data may be successfully transmitted.

In a possible implementation of the first aspect, the indication information includes an information element identifier field, a length field, and a channel sequence field, where the information element identifier field identifies the indication information, the length field indicates a length of the channel sequence field, and the channel sequence field indicates the channel information of the second channel. The indication information is encapsulated in a vendor specific Vendor Specific field of the beacon frame. In this implementation, the indication information is carried in the vendor specific field of the beacon frame, which may be better compatible with an existing protocol (for example, the 802.11 protocol) and meet a requirement of the protocol. In addition, it is easy and convenient to implement, without any conflict with the protocol.

In a possible implementation of the first aspect, the channel sequence field further indicates the channel information of the first channel.

According to a second aspect, a P2P service data transmission method is provided. The method may be executed by a second electronic device, or may be executed by a chip applied to a first electronic device. The method includes: The second electronic device transmits first service data to a first electronic device on a first channel within a first time period. The second electronic device transmits the first service data to the first electronic device on a second channel within a second time period. The first time period includes an operating slot of a P2P service, and the second time period includes a sleep slot of the P2P service. The first service data may be P2P service data, and the second service data may be Wi-Fi service data.

According to the P2P service data transmission method provided in the second aspect, the second electronic device separately transmits the P2P service data on different channels in an operating time period of the P2P service (for example, the operating slot of the P2P service) and a sleep time period of the P2P service (for example, the sleep slot of the P2P service). In this way, a time length for transmitting the P2P service data is increased, to increase a throughput of the P2P service data and reduce a transmission delay of the P2P service data, thereby improving transmission efficiency of the P2P service data and improving user experience.

For example, before the second electronic device transmits the first service data to the first electronic device on the first channel within the first time period, the first electronic device (for example, may be a smartphone) and the second electronic device (for example, may be a large-screen device) may form a P2P group by using a process of Wi-Fi P2P device discovery and Wi-Fi P2P device connection. After the P2P group is established, P2P service data, for example, a screen casting service, file sharing, or a data stream migration service, may be transmitted between the first electronic device and the second electronic device. The first electronic device may be a GO device in the P2P group, and the second electronic device may be a GC device in the P2P group.

For example, the first channel is used for transmitting the P2P service, and the second channel may be used by the first electronic device for transmitting a Wi-Fi service.

In a possible implementation of the second aspect, before the second electronic device transmits the first service data to the first electronic device, the method further includes: The second electronic device receives indication information from the first electronic device, where the indication information indicates channel information of the second channel. In this implementation, the second electronic device may clearly learn of information about the second channel. This ensures that the second electronic device and the first electronic device further transmit the P2P service data on the second channel within the second time period, thereby ensuring transmission efficiency of the P2P service data.

In a possible implementation of the second aspect, the indication information is carried in a beacon frame. In this implementation, the indication information is carried in an original beacon frame. In this way, the first electronic device does not need to use additional signaling and communication resources to send the indication information. This may reduce signaling overheads, save communication resources, and improve utilization of communication resources.

In a possible implementation of the second aspect, the channel information of the second channel includes an identifier and a bandwidth identifier of the second channel. In this implementation, on one hand, the second electronic device may quickly and accurately determine the channel information of the second channel, thereby improving efficiency and accuracy of obtaining the channel information of the second channel by the second electronic device. On the other hand, a length of the indication information may be reduced, signaling overheads of the indication information may be reduced, and communication resources may be saved.

In a possible implementation of the second aspect, the indication information further indicates channel information of the first channel. For example, information about an updated first channel may be sent to the second electronic device by using the indication information, to improve transmission efficiency of the P2P service data. Alternatively, the first electronic device may send determined channel information of the first channel to the second electronic device by using the indication information. In this way, the second electronic device and the first electronic device may transmit the P2P service data on the first channel, thereby ensuring that the P2P service data may be successfully transmitted.

In a possible implementation of the second aspect, the indication information includes an information element identifier field, a length field, and a channel sequence field, where the information element identifier field identifies the indication information, the length field indicates a length of the channel sequence field, and the channel sequence field indicates the channel information of the second channel. The indication information is encapsulated in a vendor specific Vendor Specific field of the beacon frame. In this implementation, the indication information is carried in the vendor specific field of the beacon frame, which may be better compatible with an existing protocol (for example, the 802.11 protocol) and meet a requirement of the protocol. In addition, it is easy and convenient to implement, without any conflict with the protocol.

In a possible implementation of the second aspect, the channel sequence field further indicates the channel information of the first channel.

According to a third aspect, a communication apparatus is provided. The communication apparatus includes a unit configured to perform the steps of the method according to any one of the first aspect or the possible implementations of the first aspect.

According to a fourth aspect, a communication apparatus is provided. The communication apparatus includes at least one processor and a memory. The processor is coupled to the memory, the memory stores program instructions, and when the program instructions stored in the memory are executed by the processor, the method according to any one of the first aspect or the possible implementations of the first aspect is performed.

According to a fifth aspect, a communication apparatus is provided. The communication apparatus includes at least one processor and an interface circuit. The at least one processor is configured to perform the method according to any one of the first aspect or the possible implementations of the first aspect.

According to a sixth aspect, a communication apparatus is provided. The communication apparatus includes a unit configured to perform the steps of the method according to any one of the second aspect or the possible implementations of the second aspect.

According to a seventh aspect, a communication apparatus is provided. The communication apparatus includes at least one processor and a memory. The processor is coupled to the memory, the memory stores program instructions, and when the program instructions stored in the memory are executed by the processor, the method according to any one of the second aspect or the possible implementations of the second aspect is performed.

According to an eighth aspect, a communication apparatus is provided. The communication apparatus includes at least one processor and an interface circuit. The at least one processor is configured to perform the method according to any one of the second aspect or the possible implementations of the second aspect.

According to a ninth aspect, an electronic device is provided. The electronic device includes any communication apparatus provided in the third aspect, the fourth aspect, or the fifth aspect.

According to a tenth aspect, an electronic device is provided. The electronic device includes any communication apparatus provided in the sixth aspect, the seventh aspect, or the eighth aspect.

For example, the electronic device may include a smartphone, a tablet computer, a notebook computer, a foldable screen mobile phone, a large-screen device, a smart television, an in-vehicle infotainment system, and the like.

According to an eleventh aspect, a computer program product is provided. The computer program product includes a computer program. When the computer program is executed by a processor, the computer program is configured to perform the method according to any one of the first aspect or the possible implementations of the first aspect, or the method according to any one of the second aspect or the possible implementations of the second aspect.

According to a twelfth aspect, a computer-readable storage medium is provided. The computer-readable storage medium stores a computer program. When the computer program is executed, the computer program is configured to perform the method according to any one of the first aspect or the possible implementations of the first aspect, or the method according to any one of the second aspect or the possible implementations of the second aspect.

According to a thirteenth aspect, a chip is provided. The chip includes a processor, configured to invoke a computer program from a memory and run the computer program, so that an electronic device in which the chip is installed is enabled to perform the method according to any one of the first aspect or the possible implementations of the first aspect, or the method according to any one of the second aspect or the possible implementations of the second aspect.

According to a fourteenth aspect, a P2P service data transmission system is provided. The system includes the electronic device provided in the ninth aspect and the electronic device provided in the tenth aspect.

### BRIEF DESCRIPTION OF DRAWINGS

FIG. 1 is a diagram of a form of connection and networking of Wi-Fi P2P devices;
FIG. 2 is a diagram in which an electronic device simultaneously performs a P2P service and a Wi-Fi service;
FIG. 3 is a diagram of timing of an electronic device 1 using time-division multiplexing manner to operate on a channel 36 and a channel 149 in a DBAC operating mode;
FIG. 4 is a schematic flowchart of an example of a P2P service data transmission method according to this application;
FIG. 5 is shows an example of timing of a first electronic device using time-division multiplexing to operate on a channel 36 and a channel 149 in a DBAC operating mode according to this application;
FIG. 6 is a schematic flowchart of another example of a P2P service data transmission method according to this application;
FIG. 7 is a diagram of an example of three bandwidths of a primary 20 MHz bandwidth, a secondary 20 MHz bandwidth, and a secondary 40 MHz bandwidth according to this application;
FIG. 8 is a diagram of an example of a structure of indication information according to this application;
FIG. 9 is a schematic flowchart of another example of a P2P service data transmission method according to this application;
FIG. 10 is a block diagram of an example of a communication apparatus according to an embodiment of this application;
FIG. 11 is a block diagram of another example of a communication apparatus according to an embodiment of this application; and
FIG. 12 is a block diagram of an example of an electronic device according to an embodiment of this application.

### DESCRIPTION OF EMBODIMENTS

The following describes technical solutions of this application with reference to accompanying drawings.

In the descriptions of embodiments of this application, unless otherwise stated, "/" means "or", for example, A/B may represent A or B. In this specification, "and/or" merely describes an association relationship between associated objects, and indicates that three relationships may exist. For example, A and/or B may represent three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments, unless otherwise specified, "a plurality of" means two or more than two.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

The Wi-Fi P2P technology is an important technology under the Wi-Fi DIRECT standard protocol launched by the Wi-Fi Alliance. Wi-Fi P2P allows two Wi-Fi devices to directly connect to and communicate with each other without involvement of Wi-Fi hotspots.

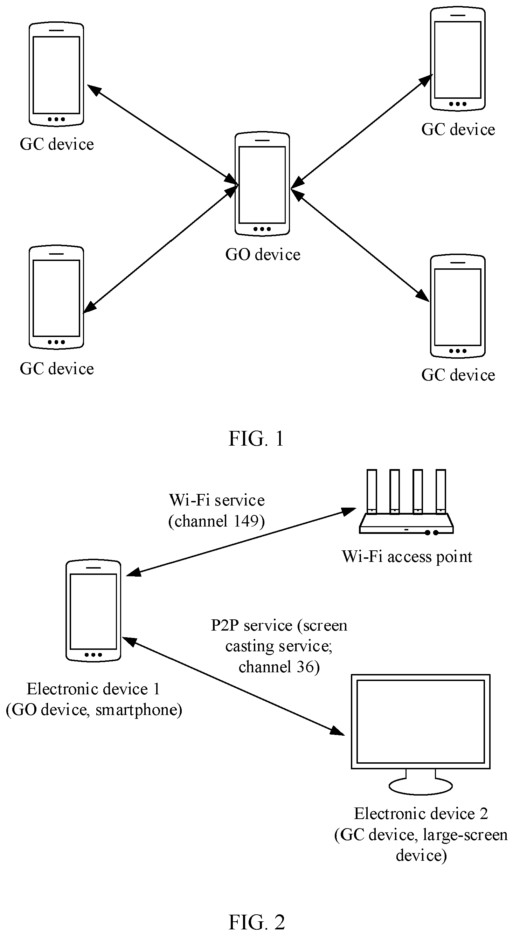

A complete P2P service (hereinafter, unless otherwise specified, a P2P service means a Wi-Fi P2P service) includes three phases: Wi-Fi P2P device discovery, Wi-Fi P2P device connection, and Wi-Fi P2P device service data transmission. A P2P group (which may also be referred to as a Wi-Fi P2P group or a Wi-Fi direct connection group) is formed after the Wi-Fi P2P device connection is established. In the P2P group, there is a distinction between the two roles of devices of a P2P group owner (group owner, GO) and a P2P group client (group client, GC). For example, FIG. 1 is a diagram of a networking form of an example of a Wi-Fi P2P group. As shown in FIG. 1, the Wi-Fi P2P group includes one GO device and four GC devices, and the GO device may establish and manage the GC devices in the Wi-Fi P2P group. The GO device may separately perform a P2P service with the GC devices, for example, a screen casting service, file sharing, or a data stream migration service.

However, with gradual enhancement of functions of electronic devices (such as smartphones, tablets, smart screens, large-screen devices, smart televisions, and notebook computers), the electronic devices may not only support a conventional WLAN function, for example, accessing a wireless network through a Wi-Fi hotspot (wireless access point (access point, AP)) to implement a Wi-Fi service, but also support a P2P service.

For example, FIG. 2 is a diagram in which an example of an electronic device simultaneously performs the P2P service and the Wi-Fi service. As shown in FIG. 2, an electronic device 1 and an electronic device 2 form a Wi-Fi P2P group. The electronic device 1 (for example, a smartphone) is a GO device, and the electronic device 2 (for example, a large-screen device) is a GC device. The electronic device 1 and the electronic device 2 perform the P2P service on a Wi-Fi channel 36, for example, a screen casting service, in which the electronic device 1 casts a video or a picture to the electronic device 2 for viewing on the electronic device 2. In addition, the electronic device 1 further performs the Wi-Fi service (or may also be referred to as a WLAN service). For example, the electronic device 1 accesses a wireless network resource (for example, playing a game or accessing a web page) on a Wi-Fi channel 149 through a Wi-Fi hotspot (for example, a Wi-Fi access point). In this scenario (that is, a scenario in which the P2P service and the Wi-Fi service coexist on different channels), for the electronic device 1, if the electronic device 1 is in a dual band adaptive concurrent (dual band adaptive concurrent, DBAC) operating mode, that is, at the same time, the electronic device 1 may perform an operation only on the channel 149 (or may be referred to as an STA channel 149) or the channel 36 (or may be referred to as a P2P channel 36), then the electronic device 1 may use time-division multiplexing to operate on the channel 36 and the channel 149, to perform the P2P service and the Wi-Fi service in a time-division manner.

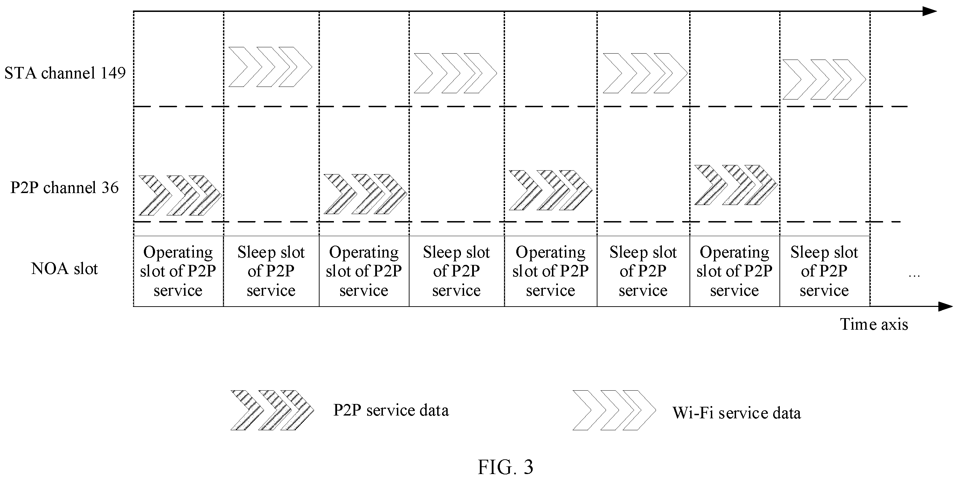

For example, FIG. 3 shows an example of timing in which the electronic device 1 uses time-division multiplexing to operate on the channel 36 (which may also be referred to as a P2P channel) and the channel 149 (which may also be referred to as an STA channel) in the DBAC operating mode in the scenario shown in FIG. 2. Optionally, in a possible implementation, the electronic device 1 may divide slots on a time axis into two types of an operating slot of the P2P service and a sleep slot of the P2P service in a notice of absence (notice of absence, NOA) manner or in another manner (for example, a driven timer) in a Wi-Fi P2P protocol. The electronic device 1 performs the P2P service within the operating slot of the P2P service, and performs the Wi-Fi service instead of the P2P service within the sleep slot of the P2P service. As shown in FIG. 3, within the operating slot of the P2P service (or may be referred to as an active slot), the electronic device 1 performs the P2P service on the P2P channel 36 with the electronic device 2, and within the sleep slot of the P2P service (or may be referred to as an absent slot), the electronic device 1 performs the Wi-Fi service on the STA channel 149. It can be learned that the electronic device 1 uses time-division multiplexing to operate on the channel 36 and the channel 149 in a time-division manner, to separately perform the P2P service and the Wi-Fi service.

Optionally, in this embodiment of this application, the operating slot of the P2P service and the sleep slot of the P2P service may be collectively referred to as an NOA slot, that is, the NOA slot includes the operating slot of the P2P service and the sleep slot of the P2P service.

Table 1 is a delay data table in which an example of an electronic device separately performs the P2P service (for example, a screen casting service) in the DBAC operating mode, a co-channel operating mode, and a dual band dual concurrent (dual band dual concurrent, DBDC) operating mode in a hybrid scenario of the P2P service and the Wi-Fi service, for example, the scenario shown in FIG. 2.

The DBAC operating mode may be understood as follows: The electronic device uses time-division multiplexing to operate on the P2P channel and the STA channel in a time-division manner, to perform the P2P service and the Wi-Fi service in a time-division manner. The co-channel operating mode may be understood as follows: The electronic device performs the P2P service and the Wi-Fi service on a same channel (that is, on an identical channel), where the P2P service and the Wi-Fi service preempt channel resources in a contention mode. At the same time, the electronic device can perform only the P2P service or the Wi-Fi service on the channel. The DBDC operating mode may be understood as follows: The electronic device performs the P2P service on a P2P channel, and simultaneously performs the Wi-Fi service on an STA channel, that is, the P2P service and the Wi-Fi service are simultaneously performed on different channels.

**Table 1**

| Scenario | | Operating mode | STA channel | P2P channel | P2P service delay (ms) | | | | | | | | |
|---|---|---|---|---|---|---|---|---|---|---|---|---|---|
| Wireless screen casting | Game playing | Co-channel | 149 | 149 | 74 | 54 | 85 | 66 | 50 | 64 | 56 | 63 | 82 |
| | Game playing | DBDC | 11 | 149 | 57 | 138 | 118 | 53 | 59 | 72 | 71 | 66 | 54 |
| | Game playing | DBAC | 36 | 149 | 98 | 31 | 121 | 116 | 84 | 115 | 117 | 122 | 117 |

**Table 1 - continued**

| Scenario | | Operating mode | P2P service delay (ms) | | | | | | | | | | |
|---|---|---|---|---|---|---|---|---|---|---|---|---|---|
| Wireless screen casting | Game playing | Co-channel | 57 | 50 | 85 | 114 | 119 | 58 | 54 | 76 | 60 | 70 | 96 |
| | Game playing | DBDC | 70 | 79 | 56 | 65 | 51 | 55 | 54 | 56 | 64 | 70 | 68 |
| | Game playing | DBAC | 152 | 183 | 116 | 126 | 110 | 116 | 119 | 117 | 114 | 116 | 44 |

**Table 1 - continued**

| Scenario | | Operating mode | P2P service delay (ms) | | | | Average delay (ms) |
|---|---|---|---|---|---|---|---|
| Wireless screen casting | Game playing | Co-channel | 63 | 75 | 52 | 63 | 70.25 |
| | Game playing | DBDC | 67 | 55 | 50 | 57 | 66.24 |
| | Game playing | DBAC | 114 | 117 | 136 | 179 | 115.83 |

As shown in Table 1, for example, the P2P service is wireless screen casting, and the Wi-Fi service is game playing. It can be learned from Table 1 that, an average delay of the P2P service of the electronic device 1 in the DBAC operating mode (115.83 ms) is far greater than an average delay of the P2P service of the electronic device 1 in the DBDC operating mode (with an average delay of 66.24 ms) and that in the same channel operating mode (70.25 ms).

In conclusion, the electronic device performs the P2P service and the Wi-Fi service in the DBAC operating mode. When different channels coexist, a throughput and a transmission delay of P2P service data may be increased, which reduces transmission efficiency of the P2P service data and user experience.

In view of this, this application provides a P2P service data transmission method, to not only transmit the P2P service data within an operating time period of the P2P service (for example, the operating slot of the P2P service), but also transmit a Wi-Fi P2P service within a sleep time period of the P2P service (for example, the sleep slot of the P2P service). In other words, the P2P service data is transmitted within both the sleep time period and the operating time period of the P2P service. In this way, a time length for transmitting the P2P service data is increased, to increase a throughput of the P2P service data and reduce a transmission delay of the P2P service data, thereby improving transmission efficiency of the P2P service data and improving user experience.

The P2P service data transmission method provided in this application may be applied to a hybrid scenario of the P2P service and the Wi-Fi service, for example, the scenario shown in FIG. 2. The P2P service and the Wi-Fi service may respectively use different channels (in other words, the P2P service and the Wi-Fi service coexist on different channels). Certainly, the method provided in this application may be further applied to another scenario. This is not limited in embodiments of this application.

The following describes the P2P service data transmission method provided in embodiments of this application with reference to specific examples.

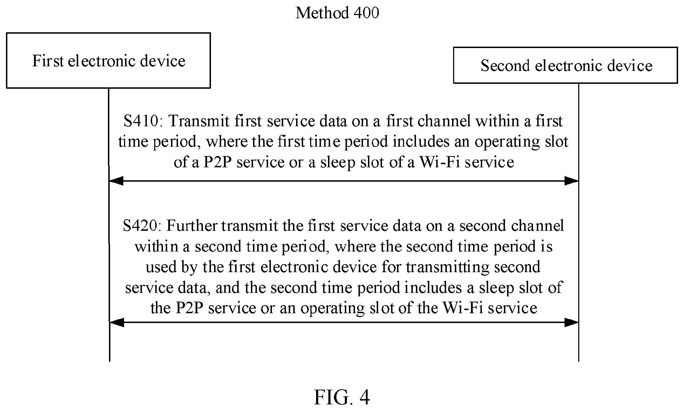

FIG. 4 is a schematic flowchart of an example of a P2P service data transmission method according to this application. As shown in FIG. 4, a method 400 includes S410 and S420.

S410: A first electronic device and a second electronic device transmit first service data on a first channel within a first time period.

For example, before S410, the first electronic device (for example, may be a smartphone) and the second electronic device (for example, may be a large-screen device) may form a P2P group by using a process of Wi-Fi P2P device discovery and Wi-Fi P2P device connection. After the P2P group is established, P2P service data, for example, a screen casting service, file sharing, or a data stream migration service, may be transmitted between the first electronic device and the second electronic device. The first electronic device may be a GO device in the P2P group, and the second electronic device may be a GC device in the P2P group.

For example, in this embodiment of this application, the first time period may include an operating slot of a P2P service or a sleep slot of a Wi-Fi service. The operating slot of the P2P service may be understood as a slot used for transmitting the P2P service. For example, the first time period may include one or more operating slots of the P2P service in FIG. 3. The sleep slot of the Wi-Fi service and the operating slot of the P2P service may correspond to a same time period. For example, the sleep slot of the Wi-Fi service may include the one or more operating slots of the P2P service shown in FIG. 3. The sleep slot of the Wi-Fi service may be understood as a slot that is not used for transmitting the Wi-Fi service, and the sleep slot of the Wi-Fi service may be used for transmitting P2P service data.

It may be understood that the sleep slot of the Wi-Fi service and the operating slot of the P2P service define one slot respectively from different perspectives. From the perspective of the Wi-Fi service, slots may be classified into a sleep slot of the Wi-Fi service and an operating slot of the Wi-Fi service. From the perspective of the P2P service, slots may be classified into a sleep slot of the P2P service and an operating slot of the P2P service. In other words, in this embodiment of this application, the sleep slot of the Wi-Fi service may also be referred to as the operating slot of the P2P service, and the two slots correspond to a same time period. The operating slot of the Wi-Fi service may also be referred to as the sleep slot of the P2P service, and the two slots correspond to a same time period. For example, the operating slot of the Wi-Fi service may include one or more sleep slots of the P2P service shown in FIG. 3.

In this embodiment of this application, the first service data may be P2P service data.

In this embodiment of this application, the first channel is used for transmitting the P2P service. The first channel may be any channel in a 5 GHz frequency band or a 2.4 GHz frequency band. For example, the first channel may be any one of channels 1 to 13 in the 2.4 GHz frequency band, or any one of channels 36 to 165 in the 5 GHz frequency band. This is not limited in embodiments of this application.

S420: The first electronic device and the second electronic device further transmit the first service data on a second channel within a second time period, where the second time period is used by the first electronic device for transmitting second service data. The second time period includes a sleep slot of the P2P service or an operating slot of the Wi-Fi service.

In a possible implementation, the second time period may include the sleep slot of the P2P service or the operating slot of the Wi-Fi service. The sleep slot of the P2P service may be understood as a slot that is not used for transmitting the P2P service, and the operating slot of the Wi-Fi service may be used for transmitting Wi-Fi service data. The sleep slot of the P2P service and the operating slot of the Wi-Fi service may correspond to a same time period. For example, the operating slot of the Wi-Fi service may include the one or more sleep slots of the P2P service shown in FIG. 3.

The second time period is used by the first electronic device for transmitting the second service data. In other words, the first electronic device may transmit the second service data within the second time period. For example, the second service data may be the Wi-Fi service data. It should be understood that the second service data may alternatively be other service data, and is not limited to the Wi-Fi service data, provided that the second service data and the first service data are different service data. This is not limited in embodiments of this application.

In a possible implementation, the second channel may be used by the first electronic device for transmitting the Wi-Fi service. In other words, the second service data may be the Wi-Fi service data. It should be understood that, in another embodiment of this application, in addition to the Wi-Fi service data, the second channel may be further used for other service data of the first electronic device. This is not limited in embodiments of this application.

In a possible implementation, the first electronic device may further transmit the second service data on the second channel within the second time period. For example, the first electronic device may transmit the Wi-Fi service data (for example, access a wireless network resource through Wi-Fi) on the second channel within the second time period. To be specific, the first electronic device may simultaneously transmit the Wi-Fi service data and the P2P service data (for example, a screen casting service, file sharing, or a data stream migration service) on the second channel within the second time period. In addition, the first electronic device further transmits the Wi-Fi service data on the first channel within the first time period.

For example, the second channel may also be any channel in the 5 GHz frequency band or the 2.4 GHz frequency band. For example, the second channel may be any one of the channels 1 to 13 in the 2.4 GHz frequency band, or any one of the channels 36 to 165 in the 5 GHz frequency band. This is not limited in embodiments of this application.

It should be further understood that, in this embodiment of this application, the first channel and the second channel are different channels. For example, the first channel may be the channel 149, and the second channel may be the channel 36. The first channel and the second channel may belong to a same frequency band (the 5 GHz frequency band or the 2.4 GHz frequency band), or may belong to different frequency bands.

According to the P2P service data transmission method provided in this embodiment of this application, the first electronic device transmits the P2P service data on the first channel within the first time period, and further transmits the P2P service data on the second channel within the second time period. In other words, the first electronic device separately transmits the P2P service data on different channels in an operating time period of the P2P service (for example, the operating slot of the P2P service) and a sleep time period of the P2P service (for example, the sleep slot of the P2P service). In this way, a time length for transmitting the P2P service data is increased, to increase a throughput of the P2P service data and reduce a transmission delay of the P2P service data, thereby improving transmission efficiency of the P2P service data and improving user experience.

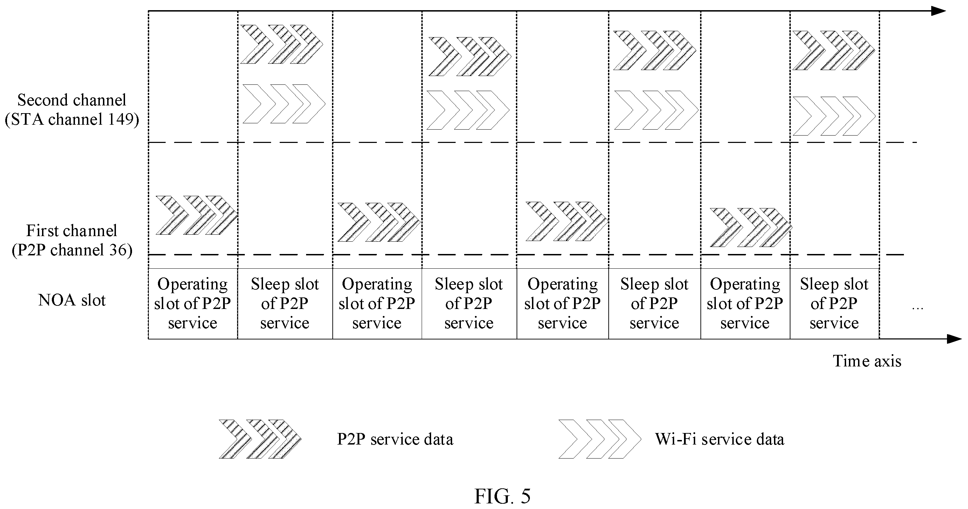

For example, FIG. 5 shows timing in which the first electronic device uses time-division multiplexing to operate on the first channel (for example, a P2P channel 36) and the second channel (for example, an STA channel 149) in a DBAC operating mode according to an embodiment of this application. As shown in FIG. 5, within the operating slot of the P2P service, the first electronic device transmits the P2P service data on the P2P channel 36; within the sleep slot of the P2P service (or may be referred to as an absent slot), the first electronic device further transmits the P2P service data on the STA channel 149; and within the sleep slot of the P2P service, the first electronic device further transmits the Wi-Fi service data on the STA channel 149.

It should be understood that, in this embodiment of this application, a time length of the first time period may be the same as or different from a time length of the second time period. For example, the first time period may be any operating slot of the P2P service shown in FIG. 5, and the second time period may be any sleep slot of the P2P service shown in FIG. 5. Alternatively, the first time period may include at least one operating slot of the P2P service shown in FIG. 5, and the second time period may include at least one sleep slot of the P2P service shown in FIG. 5. In other words, a time length of the operating slot of the P2P service may be the same as or different from a time length of the sleep slot of the P2P service.

It should be further understood that in this embodiment of this application, a slot (slot) is used as a unit of the first time period and the second time period, in addition, another time unit, for example, a frame (Frame), a subframe (Subframe), or a symbol (symbol), may be used as a unit of the first time period and/or the second time period. For example, the first time period may include at least one operating frame (or may be a subframe or a symbol) of the P2P service, and the second time period may include at least one sleep frame (or may be a subframe or a symbol) of the P2P service. This is not limited in embodiments of this application.

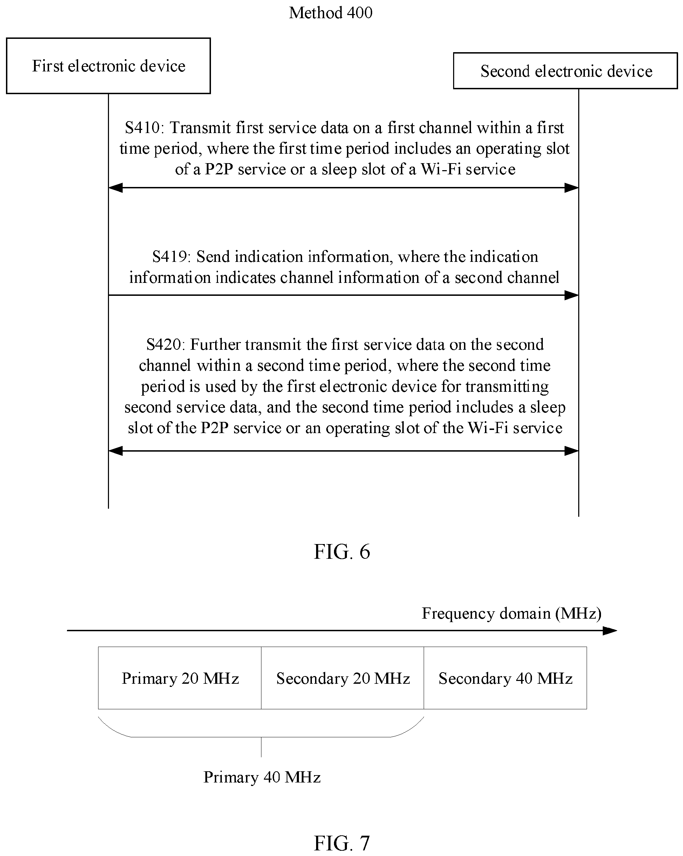

Optionally, in some possible implementations, FIG. 6 is a schematic flowchart of another example of a P2P service data transmission method according to this application. As shown in FIG. 6, based on the method shown in FIG. 4, before S420, the method 400 may further include S419.

S419: The first electronic device sends indication information to the second electronic device, where the indication information indicates channel information of the second channel.

For S410 and S420 shown in FIG. 6, refer to the descriptions of S410 and S420 in FIG. 4. For brevity, details are not described herein again.

In S419, the first electronic device may send the indication information to the second electronic device, where the indication information indicates the channel information of the second channel. After receiving the indication information, the second electronic device may learn of information about the second channel, so that the second electronic device can further transmit the first service data to the first electronic device on the second channel within the second time period.

It should be understood that, in this embodiment of this application, because the first electronic device is the GO device in the P2P group, before performing S410, the first electronic device may determine the channel information of the first channel, the first time period, and specific time information of the second time period, or the first electronic device may negotiate with the second electronic device to determine the channel information of the first channel, the first time period, and specific time information of the second time period.

For example, the first electronic device may determine slots, frames, subframes, or symbols that are respectively included in the first time period and the second time period. Alternatively, the first electronic device may determine start and end time points corresponding to each of the first time period and the second time period. After determining the information, the first electronic device may notify the second electronic device of the channel information of the first channel, the first time period, and the specific time information of the second time period, so that the first electronic device and the second electronic device transmit the P2P service data on the first channel within the first time period. In other words, before performing S410, both the first electronic device and the second electronic device clearly learn of the channel information of the first channel, the first time period, and the specific time information of the second time period.

For the second time period, the first electronic device may determine that the P2P service data further needs to be transmitted within the second time period, or the first electronic device may negotiate with the second electronic device to determine that the P2P service data further needs to be transmitted within the second time period. However, because a channel (that is, the second channel) used for transmitting the P2P service data within the second time period is not determined, the first electronic device may send the indication information to the second electronic device, where the indication information indicates the channel information of the second channel.

Optionally, in a possible implementation, the channel information of the second channel may be determined by the first electronic device. In this case, the first electronic device may send the indication information to the second electronic device.

Optionally, in another possible implementation, the second channel may be determined by the first electronic device and the second electronic device through negotiation. Certainly, if the second channel is determined by the first electronic device and the second electronic device through negotiation, the first electronic device may not need to send the indication information to the second electronic device.

After receiving the indication information, the second electronic device may determine the channel information of the second channel, so that the first electronic device and the second electronic device can further transmit the P2P service data on the second channel within the second time period.

The second electronic device is notified of the channel information of the second channel by using the indication information, so that the second electronic device can clearly learn of the information about the second channel. This ensures that the first electronic device and the second electronic device further transmit the P2P service data on the second channel within the second time period, thereby ensuring transmission efficiency of the P2P service data.

It may be understood that, in another embodiment of this application, the channel information of the second channel may alternatively be predefined (for example, defined in a protocol) or configured by using signaling. In this case, because both the first electronic device and the second electronic device learn of the channel information of the second channel, the first electronic device may not need to send the indication information to the second electronic device.

It should be further understood that S419 may be performed before S410. This is not limited in embodiments of this application.

Optionally, in some possible implementations, the indication information may further indicate specific information about the second time period.

Optionally, in some possible implementations, the indication information in S419 may be carried in a beacon (beacon) frame sent by the first electronic device to the second electronic device.

In this embodiment of this application, the first electronic device may periodically send the beacon frame to the second electronic device. The beacon frame may include information about the P2P group and the like. For example, the information about the P2P group may include at least one of a service set identifier (service set identifier, SSID), a basic service set identifier (basic service set identifier, BSSID), a frequency, and a password (PASSWORD) of the P2P group. The beacon frame may be used for maintaining and managing the P2P group formed by the first electronic device and the second electronic device. In this case, the first electronic device may carry the indication information by using the beacon frame, that is, add, into the beacon frame, content that needs to be indicated by the indication information. The indication information is carried in an original beacon frame. In this way, the first electronic device does not need to use additional signaling and communication resources to send the indication information. This may reduce signaling overheads, save communication resources, and improve utilization of communication resources.

Certainly, in another implementation of this application, the first electronic device may send the indication information to the second electronic device in another manner. For example, the indication information is carried by using particular signaling. In this manner, the indication information may be sent only when the indication information needs to be sent. This may reduce frequency of sending the indication information, and may improve flexibility and efficiency of sending the indication information.

Optionally, in some possible implementations, the channel information of the second channel indicated by the indication information may include an identifier and a bandwidth identifier of the second channel. For example, the channel information of the second channel may include a channel number and a bandwidth number of the second channel.

For example, a channel number and a bandwidth number may be pre-defined or pre-configured. One channel number is used to uniquely identify one channel, one bandwidth number may be used to uniquely identify one bandwidth, and one channel may correspond to one or more bandwidths. The first electronic device and the second electronic device may store a plurality of channel numbers and a plurality of bandwidth numbers in advance. In this case, the indication information may include the channel number and the bandwidth number of the second channel. After receiving the indication information, the second electronic device may determine a specific second channel and a specific bandwidth (bandwidth) of the second channel based on the channel number (channel number) and the bandwidth number.

For example, if the number of the second channel is 36, the second channel is the channel 36. For another example, if the number of the second channel is 149, the second channel is the channel 149.

For example, Table 2 is an example of a mapping table between the channel number, the bandwidth number, and the bandwidth. In the example shown in Table 2, one channel may correspond to a plurality of bandwidths, and one bandwidth number corresponds to one bandwidth.

**Table 2**

| Channel number | Bandwidth number | Bandwidth |
|---|---|---|
| For example, 36 or 149 | 0 | 20 |
| | 1 | 40+ |
| | 2 | 40- |
| | 3 | 80++ |
| | 4 | 80+- |
| | 5 | 80-+ |
| | 6 | 80- |

In the "Bandwidth" column in Table 2, in "80++", 80 represents a bandwidth, and from left to right, the first "+" indicates that secondary 20 MHz (or secondary 20 MHz) is on a right side of primary 20 MHz (primary 20 MHz), and the second "+" indicates that secondary 40 MHz (or secondary 40 MHz) is on a right side of primary 40 MHz. The primary 40 MHz includes (or is composed of) the secondary 20 MHz and the primary 20 MHz. In other words, the secondary 20 MHz and the primary 20 MHz form the primary 40 MHz. For example, FIG. 7 is a diagram of an example of a bandwidth represented by "80++". It can be learned from FIG. 7 that the secondary 20 MHz is on a right side of the primary 20 MHz, and the secondary 40 MHz is on a right side of the primary 40 MHz. The primary 20 MHz is a frequency range of (or corresponding to) a channel. The sum of the primary 20 MHz, the secondary 20 MHz, and the secondary 40 MHz is an 80 MHz bandwidth. In other words, "80++" represents a width, a start frequency, and an end frequency of the bandwidth, where the start frequency is a start frequency of the primary 20 MHz bandwidth, the end frequency is an end frequency of the secondary 40 MHz bandwidth, and a middle frequency is the secondary 20 MHz bandwidth.

In "80-+", 80 represents a bandwidth. Similar to the case shown in FIG. 7, from left to right, the first "-" indicates that secondary 20 MHz (or secondary 20 MHz) is on a left side of primary 20 MHz, the second "+" indicates that secondary 40 MHz (or secondary 40 MHz) is on a right side of primary 40 MHz, and the primary 40 MHz includes (or is composed of) the secondary 20 MHz and the primary 20 MHz. The three bandwidths of the primary 20 MHz, the secondary 20 MHz (secondary 20 MHz), and the secondary 40 MHz (secondary 40 MHz) do not overlap in a frequency domain range. The primary 20 MHz is a frequency range of (or corresponding to) a channel. The sum of the primary 20 MHz, the secondary 20 MHz, and the secondary 40 MHz is an 80 MHz bandwidth. In other words, "80-+" represents a width, a start frequency, and an end frequency of the bandwidth, where the start frequency is a start frequency of the secondary 20 MHz bandwidth, the end frequency is an end frequency of the secondary 40 MHz bandwidth, and a middle frequency is the primary 20 MHz bandwidth.

In "80+-", 80 represents a bandwidth. Similar to the case shown in FIG. 7, from left to right, the first "+" indicates that secondary 20 MHz (or secondary 20 MHz) is on a right side of primary 20 MHz, the second "-" indicates that secondary 40 MHz (or secondary 40 MHz) is on a left side of primary 40 MHz, and the primary 40 MHz includes (or is composed of) the secondary 20 MHz and the primary 20 MHz. The primary 20 MHz is a frequency range of (or corresponding to) a channel. The sum of the primary 20 MHz, the secondary 20 MHz, and the secondary 40 MHz is an 80 MHz bandwidth. In other words, "80+-" represents a width, a start frequency, and an end frequency of the bandwidth, where the start frequency is a start frequency of the secondary 40 MHz bandwidth, the end frequency is an end frequency of the secondary 20 MHz bandwidth, and a middle frequency is the primary 20 MHz bandwidth.

In "80-", 80 represents a bandwidth. Similar to the case shown in FIG. 7, from left to right, the first "-" indicates that secondary 20 MHz (or secondary 20 MHz) is on a left side of primary 20 MHz, the second "-" indicates that secondary 40 MHz (or secondary 40 MHz) is on a left side of primary 40 MHz, and the primary 40 MHz includes (or is composed of) the secondary 20 MHz and the primary 20 MHz. The three bandwidths of the primary 20 MHz, the secondary 20 MHz, and the secondary 40 MHz do not overlap in a frequency domain range. The primary 20 MHz is a frequency range of (or corresponding to) a channel. The sum of the primary 20 MHz, the secondary 20 MHz, and the secondary 40 MHz is an 80 MHz bandwidth. In other words, "80-" represents a width, a start frequency, and an end frequency of the bandwidth, where the start frequency is a start frequency of the secondary 40 MHz bandwidth, the end frequency is an end frequency of the primary 20 MHz bandwidth, and a middle frequency is the secondary 20 MHz bandwidth.

In "40+", 40 represents a bandwidth. Refer to FIG. 7. A difference lies in that there is no secondary 40 MHz bandwidth in FIG. 7. "+" indicates that secondary 20 MHz (or secondary 20 MHz) is on a right side of primary 20 MHz, where the primary 20 MHz is a frequency range of (or corresponding to) a channel, and the two bandwidths of the primary 20 MHz and the secondary 20 MHz do not overlap in a frequency domain range. The sum of the primary 20 MHz and the secondary 20 MHz is a 40 MHz bandwidth. In other words, "40+" represents a width, a start frequency, and an end frequency of the bandwidth, where the start frequency is a start frequency of the primary 20 MHz bandwidth, and the end frequency is an end frequency of the secondary 20 MHz bandwidth.

In "40-", 40 represents a bandwidth, and "-" represents that secondary 20 MHz (or secondary 20 MHz) is on a left side of primary 20 MHz, where the primary 20 MHz is a frequency range of (or corresponding to) a channel. The sum of the primary 20 MHz and the secondary 20 MHz is a 40 MHz bandwidth. In other words, "40+" represents a width, a start frequency, and an end frequency of the bandwidth, where the start frequency is a start frequency of the secondary 20 MHz bandwidth, and the end frequency is an end frequency of the primary 20 MHz bandwidth.

In "20", 20 represents a bandwidth. Because a channel occupies a 20 MHz bandwidth, "20" represents a frequency range of (or corresponding to) the channel.

For example, in connection with the example shown in Table 2, if content indicated by the indication information is "36, 3", then the second electronic device may determine that the second channel is a channel 36 and a bandwidth is "80". A start frequency is a start frequency of a primary 20 MHz bandwidth corresponding to the channel 36, and an end frequency is an end frequency of a secondary 40 MHz bandwidth, and a middle frequency is a secondary 20 MHz bandwidth.

For another example, if content indicated by the indication information is "36, 1", then the second electronic device may determine that the second channel is a channel 36 and a bandwidth is "40". A start frequency is a start frequency of a primary 20 MHz bandwidth corresponding to the channel 36, and an end frequency is an end frequency of a secondary 20 MHz bandwidth.

For another example, if content indicated by the indication information is "36, 0", then the second electronic device may determine that the second channel is a channel 36 and a bandwidth is "20". Because a channel occupies a 20 MHz bandwidth, "36,0" indicates the 20 MHz bandwidth occupied by the channel 36.

For another example, if content indicated by the indication information is "149, 4", then the second electronic device may determine that the second channel is a channel 149 and a bandwidth is "80 MHz". A start frequency is a start frequency of a secondary 40 MHz bandwidth, an end frequency is an end frequency of a secondary 20 MHz bandwidth, and a middle frequency is a primary 20 MHz bandwidth corresponding to the channel 149.

For another example, if content indicated by the indication information is "149, 6", then the second electronic device may determine that the second channel is a channel 149 and a bandwidth is "80 MHz". A start frequency is a start frequency of a secondary 40 MHz bandwidth, an end frequency is an end frequency of a primary 20 MHz bandwidth corresponding to the channel 149, and a middle frequency is a secondary 20 MHz bandwidth.

The identifier and the bandwidth identifier of the second channel are indicated. In this way, on one hand, the second electronic device may quickly and accurately determine the channel information of the second channel, thereby improving efficiency and accuracy of obtaining the channel information of the second channel by the second electronic device. On the other hand, a length of the indication information may be reduced, signaling overheads of the indication information may be reduced, and communication resources may be saved.

Certainly, in another implementation of this application, the channel information of the second channel may further include channel information in another form, provided that the second electronic device may determine a specific second channel and a specific bandwidth based on the channel information of the second channel. This is not limited in embodiments of this application.

Optionally, in some possible implementations, the indication information may further indicate channel information of the first channel or channel information of an updated first channel. There may be the following two different cases.

A first possible case is as follows: The channel information of the first channel may be determined by the first electronic device, and the first channel is used for transmitting the P2P service between the first electronic device and the second electronic device. A channel state may change. For example, factors such as a change in a relative location between the two electronic devices, addition of another GC device to the P2P group in a process in which the first electronic device transmits the P2P service data on the first channel, an increase in a P2P service data volume, and the like may cause a state of the previous first channel (that is, in S410) used by the first electronic device and the second electronic device for transmitting the P2P service data to become worse, for example, a delay or a packet loss rate increases. Therefore, the first channel used by the first electronic device and the second electronic device for transmitting the P2P service data in S410 needs to be updated based on a specific channel state. In this case, the first electronic device may re-determine a channel used for transmitting the P2P service data, that is, update the first channel, and send information about an updated first channel to the second electronic device by using the indication information. In this way, the first electronic device and the second electronic device may continue to transmit the P2P service data on the updated first channel, thereby improving transmission efficiency of the P2P service data. Optionally, in this case, S419 may be performed after S410 and before S420.

Certainly, in the foregoing first case, if the channel information of the first channel is determined by the first electronic device, then before S410, the first electronic device may send the channel information of the first channel to the second electronic device, and after S410, the first electronic device may send channel information of the updated first channel to the second electronic device in S419.

A second possible case is as follows: The channel information of the first channel may be determined by the first electronic device, therefore, before the first electronic device and the second electronic device transmit the P2P service data on the first channel, that is, before S410 is performed, the first electronic device needs to be notified of the channel information of the first channel, thereby ensuring that the first electronic device and the second electronic device may transmit the P2P service data on the first channel. In this case, the first electronic device may send determined channel information of the first channel to the second electronic device by using the indication information. In this way, the first electronic device and the second electronic device may transmit the P2P service data on the first channel, that is, perform S410, thereby ensuring that the P2P service data may be successfully transmitted. Optionally, in this case, S419 may be performed before S410.

Certainly, in the foregoing second case, if the channel information of the first channel is determined by the first electronic device, then after S410, the first electronic device may alternatively send channel information of the updated first channel to the second electronic device by using other signaling.

It should be further understood that, in another implementation of this application, the first electronic device may send the channel information of the first channel to the second electronic device in another manner. The channel information of the first channel may be information about the updated first channel, or may be channel information of the first channel that is initially determined before S410. For example, the channel information of the first channel is carried by using particular signaling. In this manner, the channel information of the first channel may be sent only when the channel information of the first channel needs to be sent. This may reduce frequency of sending the channel information of the first channel, and may improve flexibility and efficiency of sending the channel information of the first channel.

For example, the channel information of the first channel may further include an identifier and a bandwidth identifier of the first channel.

In some possible implementations, if the indication information in S419 indicates both the channel information of the first channel and the channel information of the second channel, then in this case, the first electronic device and the second electronic device may negotiate in advance, or may pre-configure or pre-define specific octets or bits that are of the indication information and that indicate the channel information of the first channel, and specific octets or bits that are of the indication information and that indicate the channel information of the second channel. In this way, the first electronic device and the second electronic device have a consistent understanding of the indication information, and distinguish the channel information of the first channel and the channel information of the second channel from the indication information.

For example, if it is assumed that the indication information includes two octets, then the following may be negotiated in advance, pre-configured, or pre-defined: A first octet in the indication information indicates the channel information of the first channel, and a second octet in the indication information indicates the channel information of the second channel, or a first octet indicates the channel information of the second channel, and a second octet indicates the channel information of the first channel. For example, if that the first octet of the indication information indicates the channel information of the first channel, and the second octet of the indication information indicates the channel information of the second channel is negotiated in advance, pre-configured, or pre-defined, and it is assumed that content indicated by the indication information is "36, 3, 149, 2", then the second electron may determine that the first channel is a channel 36 and a bandwidth is "80++", and the second channel is a channel 149 and a bandwidth is "40-".

Optionally, in some possible implementations of this application, the indication information (the indication information may also be referred to as an information element (information element, IE)) may include an information element identifier field, a length field, and a channel sequence field. The information element identifier (Element ID) field identifies the indication information. Optionally, the information element identifier field may be referred to as an attribute identifier (Attribute ID) field. The length (length) field indicates a length of the channel sequence field, and the channel sequence (Channel Sequence) field indicates the channel information of the second channel, or indicates the channel information of the first channel and the channel information of the second channel.

In a possible implementation, it can be learned from the foregoing that the first electronic device may periodically send a beacon frame to the second electronic device, where the beacon frame includes a vendor specific (vendor specific) field. Optionally, the vendor specific field may include the indication information. In other words, the indication information may be encapsulated in the vendor specific field of the beacon frame. To be specific, the indication information in S419 may be carried in the vendor specific (vendor specific) field of the beacon frame. The indication information is carried in the vendor specific field of the beacon frame. Because the vendor specific field has a vendor specific attribute, one vendor specific packet (field) may have one or more private attributes. The indication information is carried in the vendor specific field of the beacon frame, which may be better compatible with an existing protocol (for example, the 802.11 protocol) and meet a requirement of the protocol. In addition, it is easy and convenient to implement, without any conflict with the protocol.

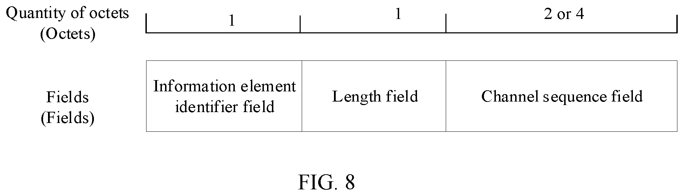

For example, FIG. 8 is a diagram of an example of a structure of indication information according to an embodiment of this application. As shown in FIG. 8, the indication information includes the information element identifier field, the length field, and the channel sequence field.

The information element identifier (Element ID) field identifies the indication information. For example, a value of the field may be 10 or another value. This is not limited in embodiments of this application.

The length (length) field indicates the length of the channel sequence field. For example, if the channel sequence field indicates only the channel information of the second channel, then the length of the channel sequence field may be two octets, and the two octets indicate the channel information of the second channel. If the channel sequence field indicates the channel information of the first channel and the channel information of the second channel, then the length of the channel sequence field may be four octets, and the four octets are classified into two groups, in which each group has two octets and indicates channel information of one channel.

The channel sequence (Channel Sequence) field indicates the channel information of the second channel, or indicates the channel information of the first channel and the channel information of the second channel. For example, the channel sequence field may indicate the identifier and the bandwidth identifier of the second channel, or may indicate the identifier and the bandwidth identifier of the first channel, and the identifier and the bandwidth identifier of the second channel.

For example, the channel sequence field may indicate an operating channel (including the first channel and the second channel) and a bandwidth in each NOA slot (including the operating slot of the P2P service (that is, the first time period) and the sleep slot of the P2P service (that is, the second time period)). Alternatively, the channel sequence field may indicate an operating channel (that is, the second channel) and a bandwidth in the sleep slot of the P2P service (that is, the second time period).

For example, as shown in FIG. 8, the length of the information element identifier field may be one octet (octet), a length of the length field may be one octet (octet), and a length of the channel sequence field may be two octets or four octets.

It should be understood that the structure shown in FIG. 7 should not impose any limitation on a specific structure of the indication information in this embodiment of this application. In another embodiment of this application, the structure of the indication information may alternatively be in another form, for example, another field is included. This is not limited in embodiments of this application.

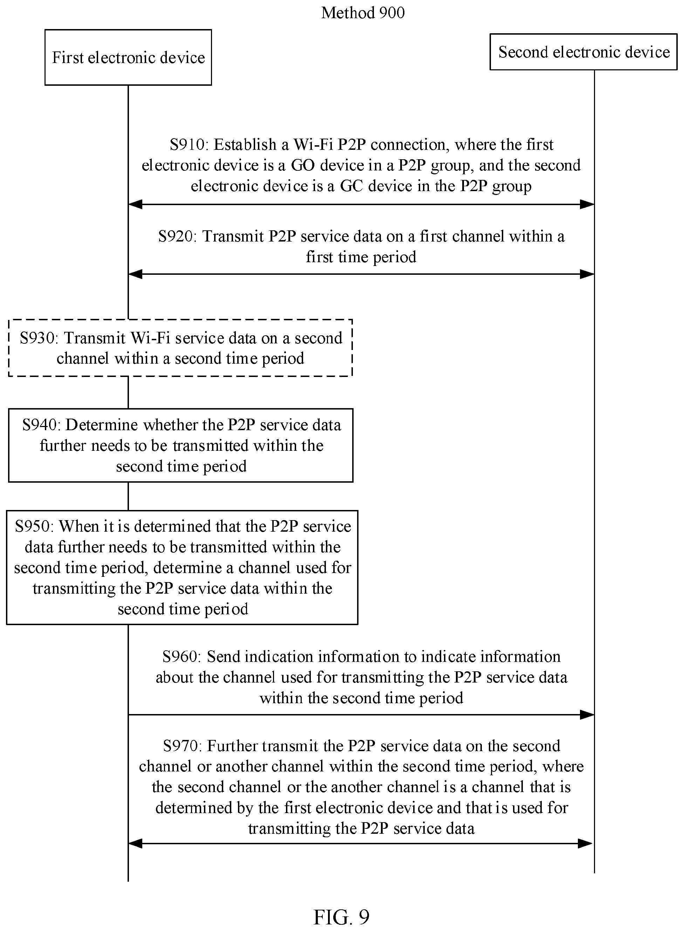

FIG. 9 is a schematic flowchart of another example of a P2P service data transmission method according to this application. As shown in FIG. 9, a method 900 includes S910 to S970.

S910: A first electronic device establishes a Wi-Fi P2P connection to a second electronic device, where the first electronic device is a GO device in a P2P group, and the second electronic device is a GC device in the P2P group.

For example, the second electronic device may start manners of discovering a device such as Bluetooth low energy (Bluetooth low energy, BLE) scanning, classic Bluetooth scanning, WLAN scanning, or Wi-Fi P2P scanning to discover the first electronic device. After discovering the first electronic device, the second electronic device may send a Wi-Fi P2P connection request to the second electronic device. For example, the Wi-Fi P2P connection request may include at least one piece of the following information: a device identifier of the second electronic device; a current Wi-Fi P2P connection state of the second electronic device (the current Wi-Fi P2P connection state of the second electronic device includes: a state in which the second electronic device does not currently have a Wi-Fi P2P connection with any device; a state in which the second electronic device currently has a Wi-Fi P2P connection with another device, and a role of the second electronic device is a GO; and a state in which the second electronic device currently has a Wi-Fi P2P connection with another device, and a role of the second electronic device is a GC device); a media access control (media access control, MAC) address of a Wi-Fi P2P port of the second electronic device; a channel list supported by the second electronic device (for example, a channel 36 is supported, which corresponds to 5190 MHz); an expected connection manner of the second electronic device (for example, the first electronic device expects to establish a Wi-Fi P2P connection as a GC, or the first electronic device expects to establish a Wi-Fi P2P connection as a GO; and in this embodiment, the second electronic device expects to establish the Wi-Fi P2P connection as the GC); a frequency of a Wi-Fi hotspot connected to the second electronic device; and whether broadband (for example, 160 MHz) is supported.

After receiving the Wi-Fi P2P connection request, and after determining that a Wi-Fi P2P connection can be established to the second electronic device, the first electronic device may send response information of the Wi-Fi P2P connection request to the second electronic device. The response information includes information such as indication information indicating that the second electronic device is allowed to join the P2P group (including the first electronic device and the second electronic device), information about the P2P group, an IP address allocated by the first electronic device to the second electronic device, and a MAC address of the first electronic device. After receiving the response information of the Wi-Fi P2P connection request, the second electronic device may join the P2P group. Therefore, the first electronic device establishes the Wi-Fi P2P connection to the second electronic device, that is, the first electronic device and the second electronic device form the P2P group, the first electronic device is a GO device in the P2P group, and the second electronic device is a GC device in the P2P group. After the Wi-Fi P2P connection is established, P2P service data, for example, a screen casting service, file sharing, or a data stream migration service, may be transmitted between the first electronic device and the second electronic device.

For example, because the first electronic device is the GO device, the first electronic device may determine channel information of a first channel and specific time information of a first time period and a second time period. After determining the information, the first electronic device may notify the second electronic device of the channel information of the first channel and the specific time information of the first time period and the second time period. Therefore, P2P service data is transmitted between the first electronic device and the second electronic device.

S920: The first electronic device and the second electronic device transmit the P2P service data on the first channel within the first time period.

For example, the first channel may be a channel 36, and the first time period includes an operating slot of a P2P service or a sleep slot of a Wi-Fi service.

For specific descriptions of S920, refer to the descriptions of S410 in the method 400. For brevity, details are not described herein again.

S930: The first electronic device transmits Wi-Fi service data on a second channel within the second time period.

In other words, the second channel may be used by the first electronic device for transmitting the Wi-Fi service. Alternatively, the second channel may be any channel in a 5 GHz frequency band or a 2.4 GHz frequency band. For example, the second channel may be a channel 149.

The second time period is used by the first electronic device for transmitting the Wi-Fi service data, that is, the first electronic device may transmit the Wi-Fi service data within the second time period. For example, the second time period may include a sleep slot of the P2P service or an operating slot of the Wi-Fi service, that is, the second time period is used by the first electronic device for transmitting the Wi-Fi service data.

It should be understood that, in this embodiment of this application, the first channel and the second channel are different channels. The first channel and the second channel may belong to a same frequency band (the 5 GHz frequency band or the 2.4 GHz frequency band), or may belong to different frequency bands.

It should be further understood that S930 is an optional step, that is, the method 900 may not include S930. When the method 900 does not include S930, after S920 is performed, S940 is performed.

S940: The first electronic device determines whether the P2P service data further needs to be transmitted within the second time period.

For example, the first electronic device may determine, based on a transmission rate and a transmission delay that are of the P2P service data, a channel state of the first channel, and the like, whether the P2P service data further needs to be transmitted within the second time period. For example, when the transmission rate of the P2P service data is low, the transmission delay of the P2P service data is long, or the channel state of the first channel is poor, the first electronic device determines that the P2P service data further needs to be transmitted within the second time period.

S950: When it is determined that the P2P service data further needs to be transmitted within the second time period, the first electronic device determines a channel used for transmitting the P2P service data within the second time period.

When the first electronic device determines that the P2P service data further needs to be transmitted within the second time period, the first electronic device may determine the channel used for transmitting the P2P service data within the second time period.

For example, the first electronic device may determine the second channel as the channel used for transmitting the P2P service data within the second time period. Alternatively, the first electronic device may determine another channel (different from both the first channel and the second channel) as a channel used for transmitting the P2P service data within the second time period. This is not limited in embodiments of this application.

S960: The first electronic device sends indication information to the second electronic device, where the indication information indicates information about the channel used for transmitting the P2P service data within the second time period.

For example, the channel information may be channel information of the second channel, or channel information of the another channel (different from both the first channel and the second channel).

Optionally, the indication information further indicates channel information of an updated first channel.

For example, the channel information of the second channel includes an identifier and a bandwidth identifier of the second channel.

For example, the indication information may be carried in a beacon (beacon) frame sent by the first electronic device to the second electronic device.

For example, the indication information is carried in a vendor specific (vendor specific) field of the beacon frame.

For example, the indication information includes an information element identifier field, a length field, and a channel sequence field. The channel sequence field indicates the channel information of each of the second channel or the another channel.

Optionally, the channel sequence field may further indicate the channel information of the updated first channel.

For specific descriptions of S960, refer to the descriptions of S419 in the method 400. For brevity, details are not described herein again.

S970: The first electronic device and the second electronic device further transmit the P2P service data on the second channel or the another channel within the second time period, where the second channel or the another channel is a channel that is determined by the first electronic device and that is used for transmitting the P2P service data.

For specific descriptions of S970, refer to the descriptions of S420 in the method 400. For brevity, details are not described herein again.

According to the P2P service data transmission method provided in this embodiment of this application, the first electronic device transmits the P2P service data on the first channel within the first time period, and further transmits the P2P service data on the second channel or the another channel within the second time period. For example, the first electronic device separately transmits the P2P service data on different channels in the operating slot of the P2P service (the first time period) and the sleep slot of the P2P service (the second time period). Alternatively, the first electronic device separately transmits the P2P service data on different channels in the sleep slot of the Wi-Fi service (the first time period) and the operating slot of the Wi-Fi service (the second time period). In this way, a time length for transmitting the P2P service data is increased, to increase a throughput of the P2P service data and reduce a transmission delay of the P2P service data, thereby improving transmission efficiency of the P2P service data and improving user experience.

It should be understood that the foregoing descriptions are merely intended to help a person skilled in the art better understand embodiments of this application, but are not intended to limit the scope of embodiments of this application. It is clearly that a person skilled in the art may make various equivalent modifications or changes based on the foregoing examples. For example, some steps in the method 400 and the method 900 may be not necessary, or some steps may be added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between embodiments. For same or similar parts that are not mentioned, refer to embodiments. For brevity, details are not described herein again.

In this embodiment, functional modules on an electronic device (including the first electronic device and the second electronic device) may be classified according to the foregoing method embodiments. For example, each functional module may be obtained through division based on each corresponding function, or two or more functions may be integrated into one processing module. The integrated module may be implemented in a form of hardware. It should be noted that module division in this embodiment is an example and is merely logical function division. In actual implementation, there may be another division manner.

It should be noted that related content of the steps in the foregoing method embodiments may be referenced to function descriptions of corresponding functional modules, and details are not described herein again.

The electronic device provided in this embodiment of this application is configured to perform the P2P service data transmission method provided in any one of the foregoing embodiments, and therefore can achieve same effect as the foregoing implementation method. When an integrated unit is used, the electronic device may include a processing module, a storage module, and a communication module. The processing module may be configured to control and manage an action of the electronic device. For example, the processing module may be configured to support the electronic device in performing steps performed by a processing unit. The storage module may be configured to support storage of program code, data, and the like. The communication module may be configured to support communication between the electronic device and another electronic device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

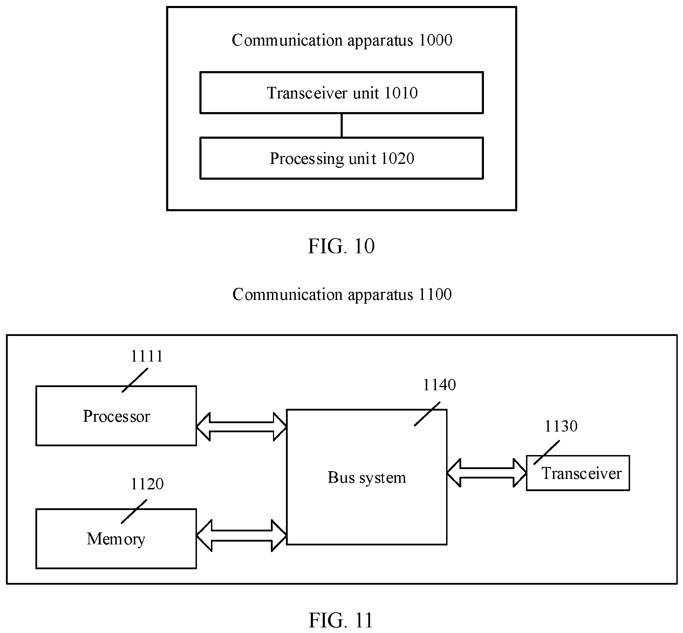

For example, FIG. 10 shows a block diagram of a communication apparatus 1000 according to an embodiment of this application. The communication apparatus 1000 may correspond to the first electronic device or the second electronic device described in the method 400, or may correspond to the first electronic device or the second electronic device described in the method 900, or may be a chip or a component used in the first electronic device or the electronic device. In addition, modules or units in the communication apparatus 1000 are respectively configured to perform actions or processing processes performed by the first electronic device or the second electronic device in the method 400 or the method 900.

As shown in FIG. 10, the communication apparatus 1000 includes a transceiver unit 1010 and a processing unit 1020. The transceiver unit 1010 is configured to send or receive a specific signal under control of the processing unit 1020.

In some embodiments,
the transceiver unit 1010 is configured to transmit first service data to the second electronic device on a first channel within a first time period. The transceiver unit 1010 is further configured to transmit the first service data to the second electronic device on a second channel within a second time period, where the second time period is used by the first electronic device for transmitting second service data. The first time period includes an operating slot of a P2P service or a sleep slot of a Wi-Fi service, and the second time period includes a sleep slot of the P2P service or an operating slot of the Wi-Fi service.

The electronic device provided in this embodiment of this application not only transmits P2P service data (that is, the first service data) within an operating time period of the P2P service (for example, the operating slot of the P2P service), but also transmits a Wi-Fi P2P service within a sleep time period of the P2P service (for example, the sleep slot of the P2P service). That is, the P2P service data is transmitted within both the sleep time period and the operating time period of the P2P service. In this way, a time length for transmitting the P2P service data is increased, to increase a throughput of the P2P service data and reduce a transmission delay of the P2P service data, thereby improving transmission efficiency of the P2P service data and improving user experience.

In some possible implementations, the second channel is used by the first electronic device for transmitting Wi-Fi service data.

In some possible implementations, before the transceiver unit 1010 transmits the first service data to the second electronic device on the second channel, the transceiver unit 1010 is further configured to send indication information to the second electronic device, where the indication information indicates channel information of the second channel.

In some possible implementations, the indication information is carried in a beacon frame.

In some possible implementations, the channel information of the second channel includes an identifier and a bandwidth identifier of the second channel.

In some possible implementations, the indication information further indicates channel information of the first channel.

In some possible implementations, the indication information includes an information element identifier field, a length field, and a channel sequence field, where the information element identifier field identifies the indication information, the length field indicates a length of the channel sequence field, and the channel sequence field indicates the channel information of the second channel. The indication information is encapsulated in a vendor specific (vendor specific) field of the beacon frame.

In some possible implementations, the channel sequence field further indicates the channel information of the first channel.

It should be understood that, for a specific process of performing the foregoing corresponding steps by the units in the communication apparatus 1000, refer to the foregoing related descriptions of the first electronic device in connection with the method 400 or the method 900. For brevity, details are not described herein again.

In some other embodiments,
the transceiver unit 1010 is configured to transmit first service data to the first electronic device on a first channel within a first time period.

The transceiver unit 1010 is further configured to transmit, by the second electronic device, second service data to the first electronic device on a second channel within a second time period. The first time period includes an operating slot of a P2P service, and the second time period includes a sleep slot of the P2P service.

The electronic device provided in this embodiment of this application transmits P2P service data (that is, the first service data) within both a sleep time period and an operating time period of the P2P service. In this way, a time length for transmitting the P2P service data is increased, to increase a throughput of the P2P service data and reduce a transmission delay of the P2P service data, thereby improving transmission efficiency of the P2P service data and improving user experience.

In some possible implementations, before the transceiver unit 1010 transmits the first service data to the first electronic device on the second channel, the transceiver unit 1010 is further configured to receive indication information from the first electronic device, where the indication information indicates channel information of the second channel.

In some possible implementations, the indication information is carried in a beacon frame.

In some possible implementations, the channel information of the second channel includes an identifier and a bandwidth identifier of the second channel.

In some possible implementations, the indication information further indicates channel information of the first channel.

In some possible implementations, the indication information includes an information element identifier field, a length field, and a channel sequence field, where the information element identifier field identifies the indication information, the length field indicates a length of the channel sequence field, and the channel sequence field indicates the channel information of the second channel. The indication information is encapsulated in a vendor specific (vendor specific) field of the beacon frame.

In some possible implementations, the channel sequence field further indicates the channel information of the first channel.

It should be understood that, for a specific process of performing the foregoing corresponding steps by the units in the communication apparatus 1000, refer to the foregoing related descriptions of the second electronic device in connection with the method 400 or the method 900. For brevity, details are not described herein again.

Further, the communication apparatus 1000 may further include a storage unit, and the transceiver unit 1010 may be a transceiver, an input/output interface, or an interface circuit. The storage unit is configured to store instructions executed by the transceiver unit 1010 and the processing unit 1020. The transceiver unit 1010, the processing unit 1020, and the storage unit are coupled to each other. The storage unit stores the instructions. The processing unit 1020 is configured to execute the instructions stored in the storage unit. The transceiver unit 1010 is configured to send or receive a specific signal under control of the processing unit 1020.

It should be understood that the transceiver unit 1010 may be the transceiver, the input/output interface, or the interface circuit. The storage unit may be a memory. The processing unit 1020 may be implemented by a processor.

As shown in FIG. 11, a communication apparatus 1100 may include a processor 1111, a memory 1120, a transceiver 1130, and a bus system 1140. Components of the communication apparatus 1100 are coupled together by using the bus system 1140. In addition to a data bus, a power bus, a control bus, a status signal bus, and the like may further be included in the bus system 1140. However, for clarity of description, various types of buses are marked as the bus system 1140 in FIG. 11. For ease of illustration, FIG. 11 shows merely an example of the bus system 1004.

The communication apparatus 1000 shown in FIG. 10 or the communication apparatus 1100 shown in FIG. 11 can implement the steps performed by the first electronic device or the second electronic device in the method 400 or the method 900. For similar descriptions, refer to the descriptions in the foregoing corresponding methods. To avoid repetition, details are not described herein again.

It should be further understood that the communication apparatus 1000 shown in FIG. 10 or the communication apparatus 1100 shown in FIG. 11 may be an electronic device, or an electronic device includes the communication apparatus 1000 or the communication apparatus 1100.

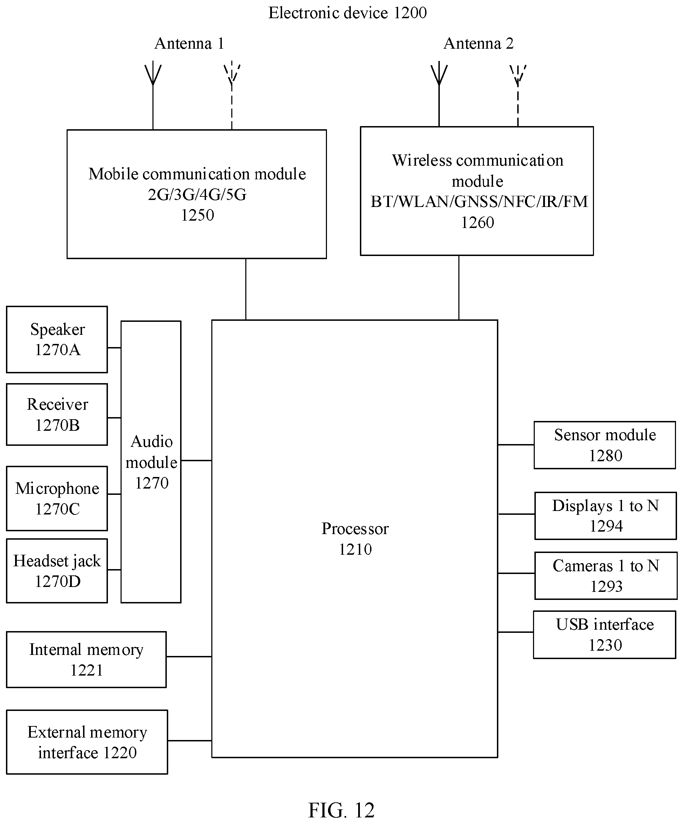

FIG. 12 is a diagram of a structure of an example of an electronic device 1200 according to this application. The electronic device may be any electronic device (for example, a smartphone, a tablet computer, a PC, a large-screen device, a smart television, a wearable device, or an in-vehicle infotainment system) in the foregoing embodiments. As shown in FIG. 12, the electronic device 1200 may include a processor 1210, an external memory interface 1220, an internal memory 1221, a universal serial bus (universal serial bus, USB) interface 1230, an antenna 1, an antenna 2, a mobile communication module 1250, a wireless communication module 1260, an audio module 1270, a speaker 1270A, a receiver 1270B, a microphone 1270C, a headset jack 1270D, a sensor module 1280, and the like. The electronic device 1200 is configured to perform the steps performed by the first electronic device or the second electronic device in the foregoing method embodiments.

It may be understood that the structure illustrated in this embodiment of this application does not constitute a specific limitation on the electronic device 1200. In some other embodiments of this application, the electronic device 1200 may include more or fewer components than those shown in the figure, or may combine some components, or may split some components, or may have different component arrangements. The components shown in the figure may be implemented by hardware, software, or a combination of software and hardware.

The processor 1210 may include one or more processing units. For example, the processor 1210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 1210, and is configured to store instructions and data. In some embodiments, the memory in the processor 1210 is a cache. The memory may store instructions or data that has been used or cyclically used by the processor 1210. If the processor 1210 needs to use the instructions or the data again, the processor may directly invoke the instructions or the data from the memory. This avoids repeated access, reduces waiting time of the processor 1210, and improves system efficiency. For example, the processor 1210 may determine channel information of a second signal.

A wireless communication function of the electronic device 1200 may be implemented through the antenna 1, the antenna 2, the mobile communication module 1250, the wireless communication module 1260, the modem processor, the baseband processor, and the like.

The antenna 1 and the antenna 2 are configured to transmit and receive an electromagnetic wave signal. Each antenna in the electronic device 1200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 1250 may provide a wireless communication solution that includes 2G/3G/4G/5G and that is applied to the electronic device 1200. The mobile communication module 1250 may include at least one filter, a switch, a power amplifier, a low noise amplifier (low noise amplifier, LNA), and the like. The mobile communication module 1250 may receive an electromagnetic wave through the antenna 1, perform processing such as filtering or amplification on the received electromagnetic wave, and transmit the electromagnetic wave to the modem processor for demodulation. The mobile communication module 1250 may further amplify a signal modulated by the modem processor, and convert an amplified signal into an electromagnetic wave for radiation through the antenna 1. In some embodiments, at least some functional modules of the mobile communication module 1250 may be disposed in the processor 1210. In some embodiments, at least some functional modules of the mobile communication module 1250 may be disposed in a same device as at least some modules of the processor 1210.

The wireless communication module 1260 may provide a wireless communication solution that is applied to the electronic device 1200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 1260 may be one or more components integrating at least one communication processing module. The wireless communication module 1260 receives an electromagnetic wave through the antenna 2, performs frequency modulation and filtering processing on the electromagnetic wave signal, and sends a processed signal to the processor 1210. The wireless communication module 1260 may further receive a to-be-sent signal from the processor 1210, perform frequency modulation and amplification on the signal, and convert an amplified signal into an electromagnetic wave for radiation through the antenna 2.

In some embodiments, in the electronic device 1200, the antenna 1 and the mobile communication module 1250 are coupled, and the antenna 2 and the wireless communication module 1260 are coupled, so that the electronic device 1200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 1200 implements a display function through the GPU, the display 1294, the application processor, and the like. The GPU is a microprocessor for image processing, and is connected to the display 1294 and the application processor. The GPU is configured to: perform mathematical and geometric computation, and render an image. The processor 1210 may include one or more GPUs that execute program instructions to generate or change display information.

The display 1294 is configured to display an image, a video, and the like. The display 1294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the electronic device 1200 may include one or N displays 1294, where N is a positive integer greater than 1.

In some embodiments of this application, when the display panel uses a material such as an OLED, an AMOLED, or an FLED, the display 1294 in FIG. 12 may be bent. In this embodiment of this application, the display that can be bent is referred to as a foldable display. The foldable display may be one screen, or may be a display formed by combining a plurality of screens. This is not limited herein.

The electronic device 1200 may implement an image shooting function through the ISP, the camera 1293, the video codec, the GPU, the display 1294, the application processor, and the like.

The ISP is configured to process data fed back by the camera 1293. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scene. In some embodiments, the ISP may be disposed in the camera 1293.

The camera 1293 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 1200 may include one or N cameras 1293, where N is a positive integer greater than 1.

The digital signal processor is configured to process a digital signal, and may process another digital signal in addition to the digital image signal. For example, when the electronic device 1200 selects a frequency, the digital signal processor is configured to perform Fourier transformation and the like on frequency energy.

The video codec is configured to compress or decompress a digital video. The electronic device 1200 may support one or more types of video codecs. In this way, the electronic device 1200 may play or record videos in a plurality of coding formats, for example, moving picture experts group (moving picture experts group, MPEG)-1, MPEG-2, MPEG-7, and MPEG-4.

The external memory interface 1220 may be used to connect to an external memory card, for example, a micro SD card, to extend a storage capability of the electronic device 1200. The external memory card communicates with the processor 1210 through the external memory interface 1220, to implement a data storage function. For example, files such as music and videos are stored in the external memory card.

The internal memory 1221 may be configured to store computer-executable program code. The executable program code includes instructions. The processor 1210 runs the instructions stored in the internal memory 1221, to perform various function applications and data processing of the electronic device 1200. The internal memory 1221 may include a program storage area and a data storage area. The program storage area may store an operating system, an application required by at least one function (for example, a voice playing function or an image playing function), and the like. The data storage area may store data (for example, audio data or a phone book) created in a process of using the electronic device 1200, and the like. In addition, the internal memory 1221 may include a high-speed random access memory, and may further include a nonvolatile memory, for example, at least one magnetic disk storage device, a flash storage device, or a universal flash storage (universal flash storage, UFS).

The electronic device 1200 may implement an audio function, for example, music playing and recording, through the audio module 1270, the speaker 1270A, the receiver 1270B, the microphone 1270C, the headset jack 1270D, the application processor, and the like.

The audio module 1270 is configured to convert digital audio information into an analog audio signal for output, and is also configured to convert analog audio input into a digital audio signal. The audio module 1270 may be further configured to encode and decode an audio signal. In some embodiments, the audio module 1270 may be disposed in the processor 1210, or some functional modules of the audio module 1270 are disposed in the processor 1210.

The speaker 1270A, also referred to as a "loudspeaker", is configured to convert an audio electrical signal into a sound signal. The electronic device 1200 may be used to listen to music or answer a call in a hands-free mode over the speaker 1270A.

The receiver 1270B, also referred to as an "earpiece", is configured to convert an audio electrical signal into a sound signal. When a call is answered or voice information is received through the electronic device 1200, the receiver 1270B may be put close to a human ear to listen to a voice.

The microphone 1270C, also referred to as a "mike" or a "mic", is configured to convert a sound signal into an electrical signal. When making a call or sending voice information, the user may make a sound by using a human mouth close to the microphone 1270C, and input a sound signal to the microphone 1270C. At least one microphone 1270C may be disposed in the electronic device 1200. In some other embodiments, two microphones 1270C may be disposed in the electronic device 1200, to collect a sound signal and implement a noise reduction function. In some other embodiments, three, four, or more microphones 1270C may alternatively be disposed in the electronic device 1200, to collect a sound signal, implement noise reduction, and identify a sound source, thereby implementing a directional recording function, and the like.

The headset jack 1270D is configured to connect to a wired headset. The headset jack 1270D may be the USB interface 1230, or may be a 12.5 mm open mobile terminal platform (open mobile terminal platform, OMTP) standard interface, or a cellular telecommunications industry association of the USA (cellular telecommunications industry association of the USA, CTIA) standard interface.

The sensor module 1280 may include a pressure sensor, a gyroscope sensor, an angle sensor, a folding sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

Certainly, the electronic device 1200 may further include a charging management module, a power management module, a battery, a button, an indicator, one or more SIM card interfaces, and the like. This is not limited in embodiments of this application.

It may be understood that the structure illustrated in this application does not constitute a specific limitation on the electronic device. In some other embodiments, the electronic device may include more or fewer components than those shown in the figure, or may combine some components, or may split some components, or may have different component arrangements. The components shown in the figure may be implemented by hardware, software, or a combination of software and hardware. This is not limited in this application.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware, or some units may be implemented in a form of software invoked by a processing element, and some units may be implemented in a form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides a P2P service data transmission system. The system includes the first electronic device and the second electronic device provided in the foregoing method embodiments.

An embodiment of this application further provides a computer-readable storage medium, configured to store computer program code. The computer program includes instructions used to perform any P2P service data transmission method provided in embodiments of this application. The readable medium may be a read-only memory (read-only memory, ROM) or a random access memory (random access memory, RAM). This is not limited in embodiments of this application.

This application further provides a computer program product. The computer program product includes instructions, and when the instructions are executed, the first electronic device or the second electronic device are enabled to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any P2P service data transmission method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The communication apparatus, the computer-readable storage medium, the computer program product, and the chip provided in embodiments are all configured to perform the corresponding methods provided above. Therefore, for beneficial effects that can be achieved by the communication apparatus, the computer-readable storage medium, the computer program product, and the chip, refer to the beneficial effects of the corresponding methods provided above. Details are not described herein again.

It may be understood that the memory in this embodiment of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/ information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the methods in embodiments of this application may be implemented by software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a readable storage medium, and includes several instructions for indicating a computing device (which may be a personal computer, a server, or a network device) to perform all or some of the steps of the methods described in embodiments of this application. The foregoing readable storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A P2P service data transmission method, wherein the method comprises:
transmitting, by a first electronic device, first service data to a second electronic device on a first channel within a first time period; and
transmitting, by the first electronic device, the first service data to the second electronic device on a second channel within a second time period, wherein the second time period is used by the first electronic device for transmitting second service data, wherein
the first time period comprises an operating slot of a P2P service or a sleep slot of a Wi-Fi service, and the second time period comprises a sleep slot of the P2P service or an operating slot of the Wi-Fi service.

2. The method according to claim 1, wherein the second channel is used by the first electronic device for transmitting Wi-Fi service data.

3. The method according to claim 1 or 2, wherein before the transmitting, by the first electronic device, the first service data to the second electronic device on a second channel, the method further comprises:
sending, by the first electronic device, indication information to the second electronic device, wherein the indication information indicates channel information of the second channel.

4. The method according to claim 3, wherein the indication information is carried in a beacon frame.

5. The method according to claim 3 or 4, wherein the channel information of the second channel comprises an identifier and a bandwidth identifier of the second channel.

6. The method according to any one of claims 3 to 5, wherein the indication information further indicates channel information of the first channel.

7. The method according to any one of claims 4 to 6, wherein the indication information comprises an information element identifier field, a length field, and a channel sequence field, wherein the information element identifier field identifies the indication information, the length field indicates a length of the channel sequence field, the channel sequence field indicates the channel information of the second channel, and the indication information is encapsulated in a vendor specific Vendor Specific field of the beacon frame.

8. The method according to claim 7, wherein the channel sequence field further indicates the channel information of the first channel.

9. A P2P service data transmission method, wherein the method comprises:
transmitting, by a second electronic device, first service data to a first electronic device on a first channel within a first time period; and
transmitting, by the second electronic device, the first service data to the first electronic device on a second channel within a second time period, wherein
the first time period comprises an operating slot of a P2P service, and the second time period comprises a sleep slot of the P2P service.

10. The method according to claim 9, wherein before the transmitting, by the second electronic device, the first service data to the first electronic device on a second channel, the method further comprises:
receiving, by the second electronic device, indication information from the first electronic device, wherein the indication information indicates channel information of the second channel.

11. The method according to claim 10, wherein the indication information is carried in a beacon frame.

12. The method according to claim 11, wherein the channel information of the second channel comprises an identifier and a bandwidth identifier of the second channel.

13. The method according to any one of claims 10 to 12, wherein the indication information further indicates channel information of the first channel.

14. The method according to any one of claims 11 to 13, wherein the indication information comprises an information element identifier field, a length field, and a channel sequence field, wherein the information element identifier field identifies the indication information, the length field indicates a length of the channel sequence field, the channel sequence field indicates the channel information of the second channel, and the indication information is encapsulated in a vendor specific Vendor Specific field of the beacon frame.

15. The method according to claim 14, wherein the channel sequence field further indicates the channel information of the first channel.

16. A communication apparatus, comprising units configured to perform the steps of the method according to any one of claims 1 to 8.

17. A communication apparatus, comprising units configured to perform the steps of the method according to any one of claims 9 to 15.

18. An electronic device, comprising a processor and a memory, wherein the processor is coupled to the memory, the memory stores program instructions, and when the program instructions stored in the memory are executed by the processor, the method according to any one of claims 1 to 8 is performed.

19. An electronic device, comprising a processor and a memory, wherein the processor is coupled to the memory, the memory stores program instructions, and when the program instructions stored in the memory are executed by the processor, the method according to any one of claims 9 to 15 is performed.

20. A communication system, wherein the communication system comprises the communication apparatus according to claim 16 and the communication apparatus according to claim 17, or the electronic device according to claim 18 and the electronic device according to claim 19.

21. A computer-readable storage medium, wherein the computer-readable storage medium stores a computer program, the computer program comprises program instructions, and when the program instructions are executed by a processor, the processor is enabled to perform the method according to any one of claims 1 to 8 or the method according to any one of claims 9 to 15.

22. A chip, comprising: a processor, configured to invoke a computer program from a memory and run the computer program, so that a communication device in which the chip is installed is enabled to perform the method according to any one of claims 1 to 8 or the method according to any one of claims 9 to 15.
